# EUROPEAN PATENT APPLICATION

(11) **EP 4 811 683 A1**
(43) Date of publication of application: **23.09.2026**
(21) Application number: 25227436.0
(22) Date of filing: 29.12.2025
(51) Int. Cl.: H04B 10/50, H04B 10/524

(54) **METHOD AND SYSTEM FOR EXTERNAL MODULATION FOR MULTI-SOURCE NRZ TO PAM-N**

(30) Priority: 19.03.2025 US 202519084395
(71) Applicant: II-VI Delaware, Inc., Wilmington, DE 19890 (US)
(72) Inventor: GURUSAMI, Aravanan, Wilmington, 19890 (US); BARBAROSSA, Giovanni, Wilmington, 19890 (US); ENG, Julie, Wilmington, 19890 (US); KOCOT, Christopher, Wilmington, 19890 (US)
(74) Representative: Schmidt, Christian

(57) **Abstract**

An optical signal generation system for optical signal generation comprises a plurality of light sources; a plurality of optical modulators each one corresponding to one of the plurality of light sources; and a synchronized driver coupled to each of the modulators. Each light source may input a continuous wave (CW) to each optical modulator. The synchronized driver may provide a non-return-to-zero (NRZ) driver signal to each modulator and the optical modulators may modulate each received optical source signal based on the NRZ driver signal communicated to each optical modulator. Each modulated optical signal may be coupled into a transmission medium, thereby generating a multi-level pulse amplitude modulated (PAM) equivalent signal.

## Description

### BACKGROUND

Traditional optical modulation schemes, such as Pulse Amplitude Modulation (PAM), Quadrature Amplitude Modulation (QAM), etc., typically rely on linear modulation techniques that adjust signal parameters continuously within a certain range. These methods, while effective, often require complex and precise control systems to maintain signal integrity, especially at high data rates. There exists a need for a simpler, more cost-effective approach that reduces the reliance on precise analog very high speed signal processing without compromising the ability to meet the increasing demand for bandwidth.

The subject matter of the present disclosure is directed to overcoming, or at least reducing the effects of, one or more of the problems set forth above.

### SUMMARY OF THE DISCLOSURE

The present disclosure pertains to the field of optical communications, specifically to the modulation techniques used in the encoding and transmission of data over optical fibers or free space. In some examples, the present disclosure introduces a novel method and system for optical signal generation that utilizes a plurality of continuous wave optical sources with external modulation, where the modulated signals are synchronized and combined to generate a multi-level optical signal, i.e., a multi-level pulse amplitude modulated (PAM) equivalent signal.

These and other features of the present disclosure will become more fully apparent from the following description and appended claims, as set forth hereinafter.

The foregoing summary is not intended to summarize each potential embodiment or every aspect of the present disclosure.

### BRIEF DESCRIPTION OF THE DRAWINGS

To further clarify the above and other features of the present disclosure, a more particular description of the subject matter will be rendered by reference to specific examples thereof, which are illustrated in the appended drawings. It is appreciated that these drawings depict only some examples of the subject matter and are therefore not to be considered limiting of its scope.
FIG. 1 illustrates the general architecture of the high-speed data transmission system, showing the interconnections between the high-speed data source, synchronized NRZ driver, light sources, modulators, and noise sources, in accordance with an example embodiment of the present disclosure.
FIG. 2 illustrates an alternative configuration of the system, highlighting the use of noise sources for modulating the modulator attenuation to further mitigate coherent interference, in accordance with an example embodiment of the present disclosure.
FIG. 3 illustrates a synchronized NRZ driver, in accordance with an example embodiment of the present disclosure.

Embodiments of the disclosure are more completely described in connection with the accompanying drawings. These figures may merely be schematic representations of current filters, assemblies, facilities, or methods to enhance understanding of the disclosed concepts.

### DETAILED DESCRIPTION OF THE DISCLOSURE

Embodiments are disclosed herein that include am optical signal generation method and system, where the system may comprise a plurality of light sources; a plurality of optical modulators each one corresponding to one of the plurality of light sources; and a synchronized driver coupled to each of the modulators. The system may be operable to: configure each light source in a continuous wave (CW) output condition to generate optical source signals communicated to each optical modulator; communicate, using the synchronized driver, a non-return-to-zero (NRZ) driver signal to each modulator; modulate, using the optical modulators, each received optical source signal based on the NRZ driver signal communicated to each optical modulator; and couple each modulated optical signal into a transmission medium, thereby generating a multi-level pulse amplitude modulated (PAM) equivalent signal.

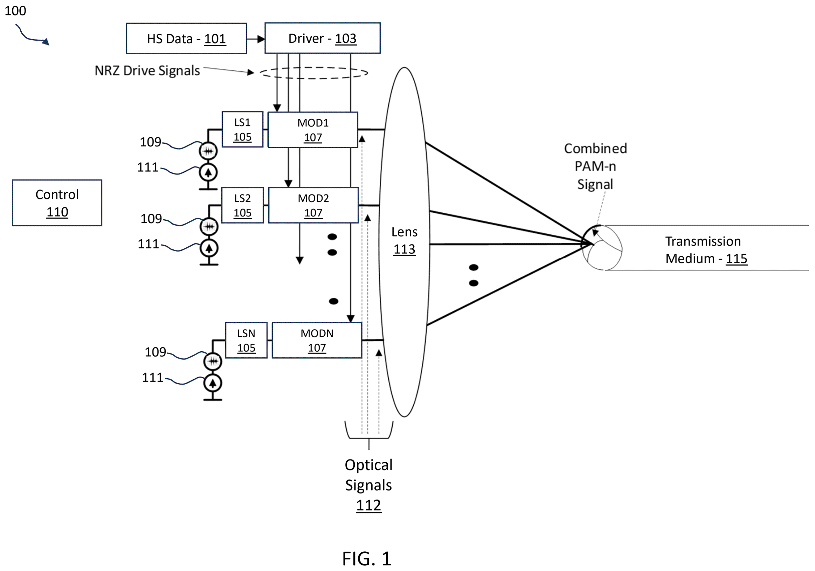

Turning to the figures, FIG. 1 illustrates the general architecture of a high-speed data transmission system 100, showing the interconnections between the high-speed data source, synchronized non-return-to-zero (NRZ) driver, light sources, modulators, noise sources, and optics, in accordance with an example embodiment of the present disclosure. The disclosure provides a system for transmitting a high-speed PAM-n equivalent data stream using multiple externally modulated light sources, either discrete devices or integrated on a single chip, with modulators that are driven by a synchronized NRZ driver. The system incorporates noise sources to modulate different aspects of the signal, either at the light sources or the modulators, thereby mitigating coherent interference in the signal output.

The transmitter 100 comprises a high-speed serial data (HS Data) source 101 input to a synchronized NRZ driver 103. The NRZ driver 103 is responsible for generating a plurality of NRZ drive signals for optical modulators 107 that modulate multiple light sources (LS1, LS2, ..., LSN) 105. Each light source 105 is coupled with a corresponding modulator 107 (MOD1, MOD2, ..., MODN) that receives the NRZ drive signals and modulate the light signals received from the light sources. The modulated signals may be focused by the lens 113 and combined at transmission medium 115.

The high-speed data source 101 may comprise any high-speed serial data generator such as a serializer/deserializer (SerDes) module, a field-programmable gate array (FPGA), or an application-specific integrated circuit (ASIC) that generates a signal for communication via the transmitter 100. The data from the high-speed data source 101 may represent data that is desired to be transmitted from the transmitter 100 to a remote receiver (not shown).

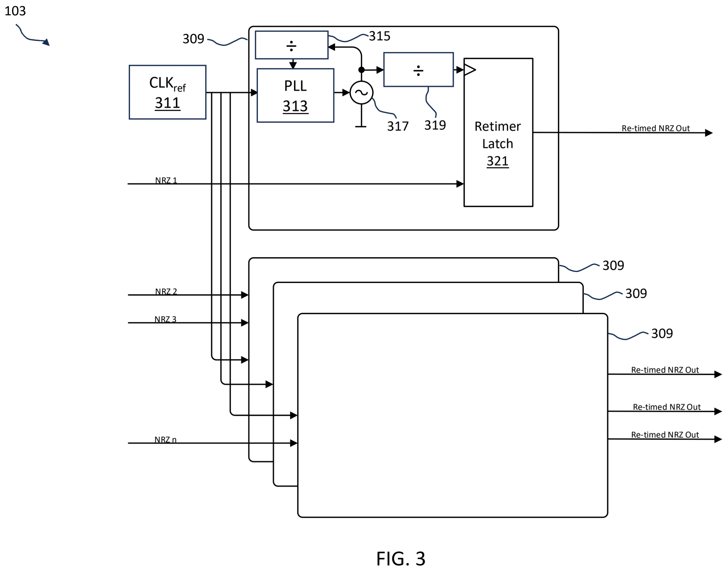

The driver 103 may comprise a standalone NRZ driver chip, part of an integrated transceiver module, or implemented in an FPGA or ASIC. In an example embodiment, the driver 103 may be on the same chip as the optical modulators 107. In another embodiment, the drivers 103 and modulators 107 may be on different chips. The driver 103 is described further with respect to FIG. 3.

The light sources 105 may comprise laser diodes, light-emitting diodes (LEDs), liquid-crystal sources, or other semiconductor light sources capable of generating optical signals at a desired wavelength for optical communications. In one example scenario, the light sources 105 may comprise an array of VCSELs on a chip that communicate output optical signals to the modulators 107 on another chip, such as a silicon photonics chip. In another example scenario, the light sources may comprise edge-emitting lasers that communicate output optical signals to the modulators on a photonics chip via grating couplers or other optical coupling devices.

The current sources 111 may comprise circuitry for applying appropriate biasing conditions on the light sources 105, such that the sources output light at a desired optical power. In an example scenario, each light source 205 may be biased at a same output level or different output levels. In an example scenario, where each light source 105 is biased at a same output, multiple output levels at the transmission medium may be enabled by summing the signals coupled to the transmission medium 115 by the modulators 107.

For example, configuring all modulators off results in a "0", while one of the modulators being on allows an optical signal to pass, which corresponds to a "1", two modulators on corresponds to a "2" and so on up to the number of light source/modulator pairs. In this manner, three sources may be utilized to generate a PAM-4 equivalent signal, while the control requirements for the modulators are much simplified compared to a conventional PAM-n system because the modulators only need to switch between an ON and OFF state instead of multiple levels between those states.

In another example scenario, the light sources 105 may be biased such that the optical signal outputs are different from each other, such as in a binary-weighted configuration, with outputs of 1X, 2X, 4X. In this case, combinations of ON/OFF states for the modulators can produce 0X (all modulators OFF), 1X (modulator for 1X source ON), 2X (modulator for 2X source ON), 3X (modulator for 1X and 2X sources ON), 4X (modulator for 4X source ON),etc... This enables a wide range of output signals with only binary switching ON/OFF for each modulator 107.

In addition, because the modulation of the optical signals is performed by the modulators 107, the biasing and control of the light sources 105 may be simpler, each merely being configured to a desired CW current level. Some amount of control may be desirable to account for temperature changes, for example, with a feedback loop to the current sources 109 from a monitor photodiode adjacent to the light sources 105 or in the modulators 107 coupled to the control 110.

The modulators 107 may comprise electro-optic modulators, acousto-optic modulators, or other devices that can modulate light based on an electrical input. In one example, the modulators 107 comprise Mach-Zehnder interferometer modulators integrated in a silicon photonics chip, although other modulator types are possible, such as thin-film lithium niobate, liquid-crystal modulators, or similar devices. In an example scenario, the modulators 107 may be configured by an applied bias. As the modulators 107 only need to switch between an ON and an OFF state, there is no concern over any non-linearity of the attenuation of the modulator versus applied bias.

The noise sources 109 may comprise random number generation circuitry, for example, that may be operable to provide a small signal current with a randomized intensity for providing a noise signal on top of the current applied to the light sources 105. Example options for the noise sources 109 are white noise generators, a pseudo-random binary sequence generator, a thermal noise source, a shot noise source, or a 1/f noise source, and may be digital or analog.

FIG. 1 also shows a control 110, a lens 113 and transmission medium 115. The lens 113 may comprise a focusing lens, or a gradient-index lens, depending on the specific requirements of the optical system to couple signals to the transmission medium 115. The lens 113 may focus the received optical signals 112 from the modulators 107 into the transmission medium 115 thereby generating a combined PAM-n signal.

The transmission medium 115 may comprise a single-mode or multi-mode optical fiber, or any other suitable optical waveguide. In another example scenario, the transmission medium 115 may comprise free space, such that the optical signals 112 are focused onto an input of a receiver. In one example, the transmission medium 115 may comprise a single core optical fiber for multi-level signal generation, thereby providing a simple optical coupling mechanism to combine the plurality of light source outputs into a single optical signal for communication via the fiber. In another example scenario, the transmission medium 115 may comprise free space.

Combining of near equal wavelength sources may induce unmanaged coherent interference, thereby causing output amplitude fluctuations. In one example, this may be mitigated or eliminated by the introduction of a small amplitude noise source to each light source bias current. The noise sources 109 at each of the light sources 105 modulate the DC bias applied to the light sources 105. In an example scenario, to mitigate coherent interference in the transmission medium 115, a noise source 109 is introduced for each light source 105. The noise sources 109 modulate the DC bias of the light sources 105, causing random chirp in the wavelength of the light sources 105, thereby reducing or eliminating the coherent interference.

A primary advantage of this binary light source modulation and multi-level signal generation scheme is simplified high-speed signal generation. From a transmitter standpoint, the combined signal looks just like a PAM-n signal without having to configure a single light source or modulator at multiple (n) levels, i.e., generating a PAM-n equivalent signal. By utilizing a plurality of CW lasers with external binary modulation, the system reduces the need for complex control electronics and precise analog adjustments, while still enabling signal generation beyond 100 GBaud.

While FIG. 1 shows one lens, the lens 113 may instead comprise a plurality of lenses depending on the focusing needs of the received optical beams. In another example embodiment, a plurality of lenses may be incorporated into a single optic assembly, or the lens may be eliminated depending on the beam direction and shape of the light source outputs from the modulators 107. In yet another example, the lens may be one or more guided wave combiners in silicon photonics or an etched waveguide or waveguides. Another example is a grating coupler for each light source and Mach-Zehnder Y-combiners.

The control 110 may comprise circuitry for configuring the driver 103, the noise sources 109, and the current sources 111, for example, and as such may comprise a processor and associated electronics for controlling output currents of the current sources 111 to be applied to the light sources 105. In addition, the control 110 may be in communication with the driver 103 for providing the NRZ drive signals to the modulators 107. The control 110 may also receive feedback from monitor photodiodes (not shown) anywhere in the transmit path for dynamically configuring the light sources 105 and the modulators 107 in a desired state. While a single block is shown for the control 110, any number of separate circuit blocks may be used, depending on the location of the element being controlled, and whether they be on-chip or off-chip.

In operation, the current sources 111 may bias the light sources 105 in an ON state, with small random fluctuations, on the order of a few tenths of dB of signal modulation, in the current provided by the noise sources 109. While this noise is added to the outgoing PAM-n signal, the higher modulation depth and increased output power from multiple CW sources mitigates the effect of this intentional noise introduction, while reducing or eliminating coherent interference. An electrical data signal, HS Data 101, may be communicated to the driver 103, which provides synchronized NRZ drive signals to the modulators 107.

The ON/OFF modulators need to be driven synchronously in the NRZ mode to result in PAM-n at the combining location. This in turn needs phase management of the drive signals from the driver 103 with respect to each path. This is accomplished utilizing the driver shown in FIG. 3.

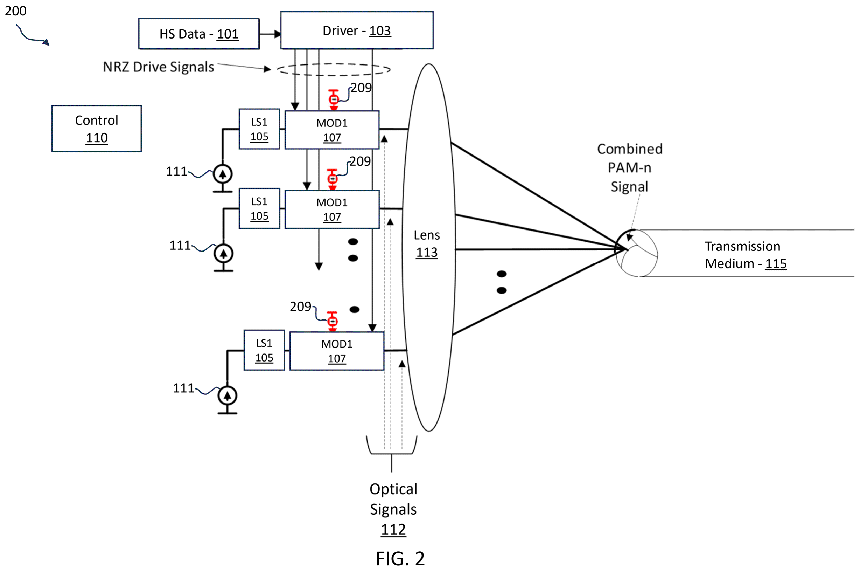

FIG. 2 illustrates an alternative configuration of the system, highlighting the use of noise sources for modulating the modulator attenuation to further mitigate coherent interference, in accordance with an example embodiment of the present disclosure. Similarly numbered elements in FIG. 2 may be substantially similar to the elements of FIG. 1. Referring to FIG. 2, there is shown transmitter 200 comprising a high-speed serial data (HS Data) source 101 input to a synchronized NRZ driver 103. The NRZ driver 103 is responsible for generating a plurality of non-return-to-zero (NRZ) drive signals for optical modulators 107 that modulate multiple light sources (LS1, LS2, ..., LSN) 105. Each light source 105 is coupled with a corresponding modulator 107 (MOD1, MOD2, ..., MODN) that receives the NRZ drive signals and modulate the light signals received from the light sources 105. The modulated optical signals 112 may be focused by the lens 113 and combined at transmission medium 115.

In the alternative configuration of FIG. 2, each light source 105 is driven by a current source 111 but the modulators 107 are also each modulated by a noise source 209. This noise source modulates the attenuation of the modulators, reducing or eliminating coherent interference in the output signal, as opposed to the noise signals being added to the bias current for the light sources 105 in FIG. 1. The system still utilizes a synchronized NRZ driver 103 to ensure precise timing of the drive signals, where the driver 103 is shown in further detail in FIG. 3.

The main difference between transmitter 200 and transmitter 100 of FIG. 1 is that the noise sources are at the modulators 107, where the noise applied to the modulators 107 modulates a random signal on the output signals of the modulators 107. This may be configured by applying a random noise signal on one arm of a Mach-Zehnder modulator bias signal, for example, thereby applying a small phase change in that arm. While the noise is added to the outgoing PAM-n signal, the higher modulation depth and increased output power from multiple CW sources mitigates the effect of this intentional noise introduction while reducing or eliminating coherent interference in the output signal.

This figure depicts an alternative configuration (200) of the system for generating a combined Pulse Amplitude Modulation (PAM-n) equivalent signal using Non-Return-to-Zero (NRZ) signals. Similar to that set forth in Figure 1, the system starts with a high-speed data source (HS Data 101) that feeds data to a driver 103, which generates multiple NRZ drive signals. These signals are used to modulate the output of several light sources (LS1 to LSN, 105) via modulators (MOD1 to MODN, 107).

In this configuration, instead of using a separate low-level random noise source (109) directly connected to each light source (as seen in Figure 1), the noise is injected into the modulation process itself. This is accomplished by a noise injection circuit (209) connected to the modulator inputs. The noise injected here serves to introduce a slight random modulation directly into the signal being modulated, ensuring that the light sources' outputs have minor variations. This approach effectively prevents coherent interference when the optical signals from the light sources are combined.

Each light source 105 is still biased by a current source 111 to maintain stable operation. The modulated optical signals 112 from the modulators 107 are combined using a lens 113, which focuses the signals into a single PAM-n equivalent signal. This combined signal is then transmitted through a transmission medium 115.

The system remains under the control of a control unit 110, which ensures proper coordination of the components to produce the desired PAM-n equivalent output signal.

FIG. 3 illustrates a synchronized NRZ driver, in accordance with an example embodiment of the present disclosure. Referring to FIG. 3, there is shown driver 103 which comprises a plurality of individual drivers 309, repeated n times, where n depends on the number of synchronized signals desired. A common reference clock 311 may be coupled to each driver 309, with each driver 309 comprising a phase-locked loop (PLL) 313, programmable frequency dividers 315 and 319, a voltage-controlled oscillator (VCO) 317, and a retimer latch 321.

The driver system 103 includes a reference clock, CLK_ref 311, that provides a stable timing source for the plurality of drivers 309. This reference clock feeds into a phase-locked loop (PLL) 313 in each NRZ signal path. The use of a common reference used across for all PLLs ensures alignment of all NRZ signals in time domain.

The PLL 313 controls the phase after dividing the VCO 317 signal utilizing the frequency divider 315, by a factor of "M" for example. Therefore, the VCO 317 is running at a frequency M times higher than the one seen by PLL 313 from the reference clock 311. This VCO frequency is also divided by frequency divider 319, also by a factor of M for example, so that the retimer latch 321 is able to adjust its phase in steps of the VCO frequency divided by M.

A PLL is an important component in various electronic and communication systems, especially for clock generation, synchronization, and jitter reduction. When used in or in conjunction with a retimer, the PLL plays an essential role in ensuring that the output signal is stable, synchronized, and precisely aligned with a desired timing. The PLL may comprise a phase detector, which compares the phase of the input signal with the phase of the feedback clock signal generated by the VCO 317 via frequency divider 315. The phase detector produces an output signal proportional to the phase difference between these two signals.

The PLL 313 may also comprise a charge pump that converts the phase error signal from the phase detector into a corresponding current signal. This current is then used to charge or discharge the loop filter, controlling the frequency of the VCO 317. The loop filter smoothens the output of the charge pump to provide a stable control voltage to the VCO 317, and is typically a low-pass filter that removes high-frequency noise and determines the dynamic response of the PLL.

The PLL 313 also comprises a feedback loop provided by the frequency divider 315 and as shown by the signal path back to the PLL 313. The feedback loop consists of the VCO output passed through frequency divider 315, which is then fed back to the phase detector of the PLL 313. The loop continuously adjusts the VCO 317 output to match the phase and frequency of the input signal, the reference clock 311. The frequency divider 315 can be fixed or programmable, allowing the PLL to lock onto different input frequencies while generating a range of output frequencies. Once the feedback clock signal is in phase and frequency alignment with the input signal, the PLL is said to be "locked." The VCO output now provides a stable and synchronized clock signal that can be used by other components in the system, such as the retimer latch 321 for configuring the timing of the NRZ signals.

The VCOs 317 in each of the blocks are driven from the same reference source and thus are synchronous to the reference source. VCOs operate at RF frequencies in the multiple GHz range. The programmable divider 319 coupled to the data retimer latch 321 enables shifting of NRZ signals relative to each other limited only by the VCO frequency. The VCO 317 generates a clock signal whose frequency is controlled by the input voltage from the PLL 313. The frequency of this clock signal is adjusted until it is locked to the frequency of the input signal, the reference clock 311. The VCO's frequency range, linearity, and sensitivity to the control voltage are important parameters. The VCO 317 must be able to generate a clock signal with minimal jitter and phase noise.

The adjusted clock signal is used to retime the incoming NRZ signals using the retimer latch 321. The retimer 321 ensures that each NRZ signal is temporally aligned, correcting gross phase alignment of NRZ signals.

Multiple instances of this driver circuit 309 are used to process all NRZ signals (NRZ 1, NRZ 2, NRZ 3, ..., NRZ n) independently. The alignment process ensures that all NRZ signals are synchronized when they reach the point of optical combination in the transmission medium.

A retimer latch is an important component in high-speed digital communication systems, particularly in applications involving serial data transmission. A retimer latch may comprise an input data buffer, a sampling latch, an output data buffer, error detection and correction, and control logic, although not all of these elements may be required in this application. An input data buffer (First-in, First-out of FIFO) may temporarily store the incoming high-speed serial data providing elasticity for temporary data rate mismatch between incoming and outgoing rates.

A sampling latch may capture the data bits using the recovered and stabilized clock signal from frequency divider 319. This component effectively "retimes" the data, reducing jitter and aligning the data transitions with the clock edges. An output data buffer may hold the retimed data before it is sent to the next stage of the communication system. This buffer helps to manage timing differences between the retimed data and the next processing element. Optional error detection and correction circuitry in the retimer latch 321 may identify and correct any bit errors that may have occurred during transmission or retiming, to ensure data integrity. Finally, control logic may manage the operation of the retimer latch 321, including enabling/disabling the retiming function, adjusting the phase of the clock signal, and coordinating the flow of data through the system.

This temporal alignment process ensures that all NRZ signals are synchronized when they drive the modulators of FIGS. 1 and 2, enabling the formation of a coherent and well-timed PAM-n signal for optical transmission.

In operation, the driver 103 provides temporal alignment control of multiple NRZ signals to ensure the proper formation of a combined pulse amplitude modulation (PAM-n) signal, as depicted in Figures 1 and 2. By retiming the data, the retimer latch 321 ensures that timing discrepancies introduced during transmission do not lead to errors, thus maintaining the integrity and reliability of high-speed data communication systems. Temporal alignment is important because each NRZ signal may have phase mismatch.

The NRZ signals NRZ 1-NRZ n may each be received by a corresponding driver 309 and synchronized into retimed NRZ out signals that are utilized to drive the modulators 107, which modulate the NRZ data onto the optical signals. Because each light source is kept in CW conditions, and each modulator is individually controlled ON or OFF as opposed to multiple levels, PAM-equivalent output signals are generated with significantly reduced modulator control performance requirements.

In disclosed examples, an optical generation system comprises a plurality of light sources, a plurality of optical modulators and a synchronized driver, each light source inputting a continuous wave (CW) light to a corresponding optical modulator, the synchronized driver driving each modulator with a NRZ signal, the output of each optical modulator being coupled into a single transmission medium, thereby generating an optical equivalent pulse amplitude modulated (PAM) signal in said single transmission medium. A plurality of current sources may each supply a current to a corresponding light source to generate said CW light.

A noise source may be coupled to each current source and may provide a noise signal to the current applied to each light source. A noise source may be coupled to each optical modulator and may provide a noise signal to a bias applied to each optical modulator. The synchronized driver may comprise a phase-locked loop (PLL) and a retimer latch for each optical modulator. A single clock reference may be coupled to each PLL.

The synchronized driver may be operable to provide the driver signals for the plurality of optical modulators by, in each retimer latch, synchronizing a received NRZ data signal with a frequency-divided clock signal provided by the PLL and based on the single clock reference. The transmission medium may comprise a single-core optical fiber. A lens may focus each modulated optical signal into the transmission medium. The plurality of light sources may comprise vertical cavity surface emitting lasers (VCSELs) or edge-emitting lasers.

In other disclosed examples, an optical signal generation system comprises a plurality of light sources; a plurality of optical modulators each one corresponding to one of the plurality of light sources; and a synchronized driver coupled to each of the modulators. The system may be operable to: configure each light source in a continuous wave (CW) output condition to generate optical source signals communicated to each optical modulator; communicate, using the synchronized driver, a non-return-to-zero (NRZ) driver signal to each modulator; modulate, using the optical modulators, each received optical source signal based on the NRZ driver signal communicated to each optical modulator; and couple each modulated optical signal into a transmission medium, thereby generating a multi-level pulse amplitude modulated (PAM) equivalent signal.

The system may comprise a current source that configures each light source in said CW output condition. A noise source may be coupled to each current source and provides a noise signal to the current applied to each optical source. A noise source is coupled to each optical modulator and provides a noise signal to a bias applied to each optical modulator. The synchronized driver may comprise a phase-locked loop (PLL) and a retimer latch for each optical modulator. A single clock reference may be coupled to each PLL.

The synchronized driver may be operable to provide the driver signals for the plurality of optical modulators by, in each retimer latch, synchronizing a received NRZ data signal with a frequency-divided clock signal provided by the PLL and based on the single clock reference. The transmission medium may comprise a single-core optical fiber. A lens may focus each modulated optical signal into the transmission medium. The plurality of light sources may comprise vertical cavity surface emitting lasers (VCSELs) or edge-emitting lasers.

In the drawings, similar features are denoted by the same or similar reference signs throughout.

This disclosure may relate to the following implementations: An optical signal generation system for optical signal generation comprises a plurality of light sources; a plurality of optical modulators each one corresponding to one of the plurality of light sources; and a synchronized driver coupled to each of the modulators. Each light source may input a continuous wave (CW) to each optical modulator. The synchronized driver may provide a non-return-to-zero (NRZ) driver signal to each modulator and the optical modulators may modulate each received optical source signal based on the NRZ driver signal communicated to each optical modulator. Each modulated optical signal may be coupled into a transmission medium, thereby generating a multi-level pulse amplitude modulated (PAM) equivalent signal.

The present application claims priority of US patent application 19/084,395 filed on March 19, 2025. The entire disclosure content of this application is hereby incorporated herein by reference for all purposes.

In the following, a set of items is disclosed. The items are numbered to facilitate referencing the features of one item in other items. The items form part of the present disclosure and could be made subject to independent and/or dependent claims irrespective of what currently is claimed in the application. We note, however, that the scope of protection is defined by the appended claims, where the following items do not constitute claims. The items are:
1. A system for optical signal generation comprising:
   a plurality of light sources,
   a plurality of optical modulators and
   a synchronized driver,
   each light source inputting a continuous wave (CW) light to a corresponding optical modulator,
   the synchronized driver driving each modulator with a NRZ signal,
   the output of each optical modulator being coupled into a single transmission medium, thereby generating an optical equivalent pulse amplitude modulated (PAM) signal in said single transmission medium.
2. The system of item 1, comprising a plurality of current sources that each supply a current to a corresponding light source to generate said CW light.
3. The system of item 2, wherein a noise source is coupled to each current source and provides a noise signal to the current applied to each light source.
4. The system of item 1, wherein a noise source is coupled to each optical modulator and provides a noise signal to a bias applied to each optical modulator.
5. The system of item 1, wherein the synchronized driver comprises a phase-locked loop (PLL) and a retimer latch for each optical modulator.
6. The system of item 5, wherein a single clock reference is coupled to each PLL.
7. The system of item 6, wherein the synchronized driver is operable to provide the driver signals for the plurality of optical modulators by, in each retimer latch, synchronizing a received NRZ data signal with a frequency-divided clock signal provided by the PLL and based on the single clock reference.
8. The system of item 1, wherein the transmission medium comprises a single-core optical fiber.
9. The system of item 1, wherein a lens focuses each modulated optical signal into the transmission medium.
10. The system of item 1, wherein the plurality of light sources comprise vertical cavity surface emitting lasers (VCSELs) or edge-emitting lasers.
11. A method of generating optical signals comprising:
   in a system comprising a plurality of light sources, a plurality of optical modulators and a synchronized driver:
   inputting, by each light source, a continuous wave (CW) light to a corresponding optical modulator;
   driving, using the synchronized driver, each modulator with a NRZ signal; and
   coupling the output of each optical modulator being into a single transmission medium, thereby generating an optical equivalent pulse amplitude modulated (PAM) signal in said single transmission medium.
12. The method of item 11, comprising configuring each light source to generate said CW light utilizing a current source coupled to each light source.
13. The method of item 12, comprising coupling, utilizing a noise source, a noise signal to a current applied to each optical source by the current source coupled to each light source.
14. The method of item 11, comprising providing, utilizing a noise source, a noise signal to a bias applied to each optical modulator.
15. The method of item 11, wherein the synchronized driver comprises a phase-locked loop (PLL) and a retimer latch for each optical modulator.
16. The method of item 15, comprising coupling a single clock reference to each PLL.
17. The method of item 16, comprising providing, utilizing the synchronized driver, the driver signals for the plurality of optical modulators by, in each retimer latch, synchronizing a received NRZ data signal with a frequency-divided clock signal provided by the PLL and based on the single clock reference.
18. The method of item 11, wherein the transmission medium comprises a single-core optical fiber.
19. The method of item 11, comprising focusing each modulated optical signal into the transmission medium utilizing a lens.
20. The method of item 11, wherein the plurality of light sources comprise vertical cavity surface emitting lasers (VCSELs) or edge-emitting lasers.

The foregoing description of preferred and other embodiments is not intended to limit or restrict the scope or applicability of the inventive concepts conceived of by the Applicants. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter.

## Claims

1. A system for optical signal generation comprising:
a plurality of light sources,
a plurality of optical modulators and
a synchronized driver,
each light source inputting a continuous wave (CW) light to a corresponding optical modulator,
the synchronized driver driving each modulator with a NRZ signal,
the output of each optical modulator being coupled into a single transmission medium, thereby generating an optical equivalent pulse amplitude modulated (PAM) signal in said single transmission medium.

2. The system of claim 1, comprising a plurality of current sources that each supply a current to a corresponding light source to generate said CW light.

3. The system of claim 2, wherein a noise source is coupled to each current source and provides a noise signal to the current applied to each light source.

4. The system according to any one of the preceding claims, wherein a noise source is coupled to each optical modulator and provides a noise signal to a bias applied to each optical modulator.

5. The system according to any one of the preceding claims, wherein the synchronized driver comprises a phase-locked loop (PLL) and a retimer latch for each optical modulator.

6. The system of claim 5, wherein a single clock reference is coupled to each PLL.

7. The system of claim 6, wherein the synchronized driver is operable to provide the driver signals for the plurality of optical modulators by, in each retimer latch, synchronizing a received NRZ data signal with a frequency-divided clock signal provided by the PLL and based on the single clock reference.

8. The system according to any one of the preceding claims, wherein the transmission medium comprises a single-core optical fiber.

9. The system according to any one of the preceding claims, wherein a lens focuses each modulated optical signal into the transmission medium.

10. The system according to any one of the preceding claims, wherein the plurality of light sources comprise vertical cavity surface emitting lasers (VCSELs) or edge-emitting lasers.

11. A method of generating optical signals comprising:
in a system comprising a plurality of light sources, a plurality of optical modulators and a synchronized driver:
inputting, by each light source, a continuous wave (CW) light to a corresponding optical modulator;
driving, using the synchronized driver, each modulator with a NRZ signal; and
coupling the output of each optical modulator being into a single transmission medium, thereby generating an optical equivalent pulse amplitude modulated (PAM) signal in said single transmission medium.

12. The method of claim 11,
a) comprising configuring each light source to generate said CW light utilizing a current source coupled to each light source, wherein, optionally,
the method further comprising coupling, utilizing a noise source, a noise signal to a current applied to each optical source by the current source coupled to each light source, and/or
b) comprising providing, utilizing a noise source, a noise signal to a bias applied to each optical modulator, and/or
c) wherein the synchronized driver comprises a phase-locked loop (PLL) and a retimer latch for each optical modulator, and/or
d) wherein the transmission medium comprises a single-core optical fiber, and/or
e) comprising focusing each modulated optical signal into the transmission medium utilizing a lens.

13. The method of claim 12, option c), comprising coupling a single clock reference to each PLL.

14. The method of claim 13, comprising providing, utilizing the synchronized driver, the driver signals for the plurality of optical modulators by, in each retimer latch, synchronizing a received NRZ data signal with a frequency-divided clock signal provided by the PLL and based on the single clock reference.

15. The method according to any one of claims 11 to 14, wherein the plurality of light sources comprise vertical cavity surface emitting lasers (VCSELs) or edge-emitting lasers.
